# EUROPÄISCHE PATENTSCHRIFT

(11) **EP 2 028 058 B1**
(45) Veröffentlichungstag und Bekanntmachung des Hinweises auf die Patenterteilung: **01.12.2010**
(21) Anmeldenummer: 08012739.2
(22) Anmeldetag: 15.07.2008
(51) Int. Cl.: B60R 16/023

(54) **Kraftfahrzeug mit einer Anzeige einer das Fahrverhalten im Hinblick auf den Kraftstoffverbrauch beschreibenden Information**
Motor vehicle with a display of information which describes the driving behaviour in respect of the fuel consumption
Véhicule automobile doté d'un affichage d'une information décrivant le comportement de conduite par rapport à la consommation de carburant

(30) Priorität: 24.08.2007 DE 202007011919 U
(43) Veröffentlichungstag der Anmeldung: 25.02.2009
(73) Patentinhaber: Audi AG, 85045 Ingolstadt (DE)
(72) Erfinder: Burgert, Sascha, 85088 Vohburg (DE); Apel, Frank, 85055 Ingolstadt (DE); Ecard, Karl Bernhard, 89077 Ulm (DE)
(74) Vertreter: Thielmann, Frank

(56) Entgegenhaltungen:
- EP-A- 0 023 283
- DE-A1- 3 224 966
- DE-A1- 3 232 160
- DE-A1- 19 728 872

## Beschreibung

Die Erfindung betrifft ein Kraftfahrzeug umfassend ein Schaltgetriebe, ein Antriebsaggregat sowie ein Bremssystem, welche allesamt vom Fahrer aktiv zu bedienen sind.

Moderne Kraftfahrzeuge verfügen üblicherweise über eine Einrichtung zur Ermittlung des momentanen Kraftverbrauchs, d. h., der Fahrer erhält eine kontinuierliche Anzeige über den Kraftstoffverbrauch, üblicherweise in l/100km an einer geeigneten Anzeigeeinrichtung ausgegeben. Hieran kann sich der Fahrer orientieren und versuchen, den Kraftstoffverbrauch möglichst gering zu halten, wenn er dies wünscht. Die üblichen, zu einer verbrauchsarmen Fahrweise führenden Handlungen sind üblicherweise geprägt durch ein frühzeitiges Schalten des Getriebes bei entsprechender Drehzahl, durch maßvolles Beschleunigen über das Antriebsaggregat sowie durch maßvolles, vorausschauendes Betätigen des Bremssystems in Verbindung mit einer Ausnutzung der Motorbremse im Schubbetrieb. Anhand einer kontinuierlichen und folglich laufend wechselnden Anzeige des Ist-Verbrauchs hat der Fahrer jedoch keine Kontrollmöglichkeit dahingehend, wie erfolgreich seine Bemühungen sind, kraftstoffreduziert zu fahren. Auch eine Anzeige eines Durchschnittsverbrauchs, der üblicherweise bezogen auf die letzten zurückgelegten 100 km berechnet wird, ist für den Fahrer kein ausreichendes Orientierungsmittel, da diese Anzeige zu träge ist, um in kurzer Zeit eine bestimmte Fahrweise als verbrauchsmindernd erkennen zu können. Darüber hinaus erhält der Fahrer anhand der bisher bekannten Verbrauchsangaben auch keine handlungsaufgelöste Information dahingehend, welche der durchgeführten Handlungen nun tatsächlich für eine mögliche Verbrauchsreduzierung günstig ist, und welche Handlung nachteilig ist und deshalb verbesserungswürdig wäre.

D1 (EP 0 023 283 A1) betrifft eine Anordnung zur Gewinnung einer Aussage bezüglich eines wirtschaftlichen und/oder unwirtschaftlichen Betriebes eines Kraftfahrzeugs unter Verwendung mehrerer, unterschiedliche Betriebsgrößen erfassender Geber, Mitteln zum Messen und/oder lediglich Übertragen der erfassten Betriebsgrößen auf eine Einrichtung zur Bildung von Betriebszuständen charakteristischen Werten sowie Mitteln zum Anzeigen des Ergebnisses der Bewertung der gebildeten Betriebszustandswerte anhand eines vorgegebenen Bewertungsmusters.

D2 (DE 32 24 966 A1) betrifft eine Anzeigevorrichtung für die Wirtschaftlichkeit eines Betriebs eines Kraftfahrzeugs, wobei dort lediglich eine Betriebsgröße, nämlich die Beschleunigung beziehungsweise Verzögerung, erfasst wird und anhand dieser dem Fahrer eine Information bezüglich der Wirtschaftlichkeit seines Fahrstils vermittelt wird.

D3 (DE 32 32 160 A1) betrifft ein Verfahren und eine Anordnung zur Übermittlung von Informationen an Fahrer von Kraftfahrzeugen über eine momentane, bezogen auf den Kraftstoffverbrauch günstige Fahrweise, wobei eine Änderung der Rückstellkraft eines Fahrpedals im Bereich des gesamten Pedalwegs in Abhängigkeit von Kenngrößen, die das Motordrehmoment und die Motordrehzahl wiedergeben automatisch eingestellt wird. Diese Änderung wird vom Fahrer als haptisches Signal in Form einer Druckänderung an dessen Fußsohle wahrgenommen.

D4 (DE 197 28 872 A1) betrifft ein Verfahren und eine Vorrichtung zum Erfassen des Fahrstils eines Fahrers, wobei innerhalb eines Fahrzeugs mindestens ein Beschleunigungssensor angeordnet ist, der Beschleunigungswerte in Fahrtrichtung oder quer dazu erfasst, welche Beschleunigungswerte in einem Speicher abgelegt werden. Die Speicherung erfolgt dabei ausschließlich, wenn der erfasste Beschleunigungswert einen vordefinierten Grenzwert überschreitet.

Der Erfindung liegt damit das Problem zugrunde, ein Kraftfahrzeug anzugeben, das dem Fahrer die Möglichkeit zum Erkennen einer verbrauchsoptimierten Fahrweise bietet.

Zur Lösung dieses Problems ist bei einem Kraftfahrzeug der eingangs genannten Art erfindungsgemäß eine Einrichtung zur kontinuierlichen Ermittlung einer das Bedienverhalten des Schaltgetriebes und/oder das Bedienverhalten des Antriebsaggregats und/oder das Bedienverhalten des Bremssystems qualitativ im Hinblick auf einen verhaltensbezogenen Kraftstoffverbrauch beschreibenden Information anhand erfasster Betriebsparameter des Kraftfahrzeugs und zur Ausgabe der Information an einer Anzeigeeinrichtung vorgesehen ist.

Die erfindungsgemäß vorgesehene Einrichtung ist dazu ausgebildet, das Bedienverhalten des Fahrers beim Schalten, Beschleunigen und/oder Bremsen qualitativ dahingehend zu bewerten, ob es hinsichtlich des Kraftstoffverbrauchs positiv oder negativ ist, ob das Verhalten also dazu geeignet ist, den Kraftstoffverbrauch zu reduzieren, oder ob es eher zu einem Kraftstoffmehrverbrauch führt. Hierzu greift die Einrichtung auf unterschiedliche Betriebsparameter des Kraftfahrzeugs zurück, die üblicherweise von den entsprechenden eingebundenen Elementen, nämlich dem Schaltgetriebe, dem Antriebsaggregat und dem Bremssystem bzw. deren Steuereinrichtungen auf einen Fahrzeugsbus, üblicherweise den CAN-Bus, gelegt werden, wobei ihm Rahmen der Informationsermittlung auch andere Betriebsparameter anderer Fahrzeugelemente berücksichtigt werden können, beispielsweise, wie schnell das Fahrpedal betätigt wird und um welchen Winkel, wie stark die Verzögerung ist bzw. wie stark und schnell das Bremspedal betätigt wird, bei welcher Drehzahl geschaltet wird (hoch- oder niedertourig) und welche Motorlast anliegt, etc. Berücksichtigt werden kann jedweder Betriebsparameter, der förderlich ist, das Bedienverhalten qualitativ zu bewerten, ob es also verbrauchserhöhend oder verbrauchsreduzierend ist. Eine quantitative Bewertung ist zwar möglich, jedoch nicht unbedingt erforderlich, nachdem es zentral darum geht, die Fahrweise im Allgemeinen zu bewerten.

Ersichtlich erfolgt die Bewertung einzelner systembezogener Bedienverhalten, d. h., dass das Bedienverhalten des Schaltgetriebes separat bewertet wird, entsprechendes gilt für das Bedienverhalten des Antriebsaggregats und des Bremssystems. Gegebenenfalls kann auch nur das Bedienverhalten eines Systems bewertet werden, bevorzugt aber werden alle Systeme bewertet, um dem Fahrer möglichst umfassende Informationen hinsichtlich der zentralen, verbrauchserhöhenden oder verbrauchserniedrigenden Handlungen zu geben.

Der Fahrer erhält in jedem Fall eine entsprechende Informationsanzeige an einer geeigneten Anzeigeeinrichtung, beispielsweise einem Display im Kombiinstrument oder an einem größeren Display, wie es üblicherweise im Bereich des Armaturenbretts vorgesehen ist. Der Fahrer erkennt hieran sofort und verhaltensaufgelöst, ob beispielsweise sein Schaltverhalten positiv bewertet wird, mithin also verbrauchsreduzierend ist, oder ob er beispielsweise bei zu hoher Drehzahl schaltet. Eine entsprechende Information erhält er über sein Fahrverhalten, z.B. das Beschleunigungs- oder Bremsverhalten. Beschleunigt der Fahrer uneffektiv beim Anfahren oder innerhalb der einzelnen Gänge, so wird sein Bedienverhalten dementsprechend bewertet. Entsprechendes gilt bezüglich des Bremsverhaltens. Fährt der Fahrer jeweils sehr nahe auf entsprechende Hindernisse auf und bremst er sodann sehr stark, so ist dies ebenfalls verbrauchserhöhend und damit nachteilig, weshalb dieses Verhalten eher negativ bewertet wird. Fährt er jedoch vorausschauend, bremst er rechtzeitig und nutzt er vor allem die Motorbremse im Schubbetrieb zur Verzögerung, so wird sein Bremsverhalten positiv bewertet. Insgesamt kann sich der Fahrer des erfindungsgemäßen Kraftfahrzeugs auf sehr schnelle Weise ein Bild über seine Fahrweise im Hinblick auf den Kraftstoffverbrauch machen und auch sofort erkennen, ob eine bestimmte Änderung der Fahrweise zu einer Veränderung der Bewertung führt, nachdem wie beschrieben die Informationsermittlung kontinuierlich erfolgt, mithin also kontinuierlich Änderungen in den Betriebsparametern, die auf Verhaltensänderungen zurückzuführen sind, in die Bewertung eingehen.

An dieser Stelle sei darauf hingewiesen, dass unter dem Begriff "Schaltgetriebe" sowohl ein manuelles Schaltgetriebe zu verstehen ist, wie auch ein Automatikgetriebe, das in einem aktiven Schaltmodus betrieben werden kann, bei dem also der Fahrer durch Umlegen des Wählhebels die einzelnen Fahrstufen selbst schalten kann. Weiterhin ist unter dem Begriff "Antriebsaggregat" sowohl eine Bremskraftmaschine zu verstehen, wobei dann der Begriff "Kraftstoffverbrauch" den Benzin- oder Dieselverbrauch beschreibt, als auch ein Elektromotor, der aus einer Batterie gespeist wird, wobei dann unter dem Begriff "Kraftstoffverbrauch" der Stromverbrauch zu verstehen ist. Auch andere Antriebsaggregattypen wie ein Erdgas- oder Wasserstoffantrieb kann hierunter zu verstehen sein, wobei der Begriff "Kraftstoffverbrauch" dann den jeweiligen Gasverbrauch beschreibt etc.

Eine zweckmäßige Weiterbildung der Erfindung sieht vor, die Einrichtung wahlweise zu- und abschaltbar auszulegen, wobei die Erfassung der Betriebsparameter und gegebenenfalls die Ermittlung der Informationen auch bei abgeschalteter Einrichtung erfolgt. Einerseits wird also dem Fahrer die Wahlmöglichkeit hinsichtlich des Einrichtungsbetriebs gegeben, zum anderen stellt diese Erfindungsausgestaltung auch sicher, dass unmittelbar bei Zuschalten der Einrichtung die Informationen vorliegen, nachdem die Betriebsparametererfassung und gegebenenfalls auch die Ermittlung der Informationen auch bei ausgeschalteter Einrichtung quasi im Hintergrund läuft, so dass mit Zuschalten der Einrichtung sofort auf die erfassten Betriebsparameter zurückgegriffen werden kann, woraufhin dann unmittelbar die Informationsermittlung erfolgt, oder dass direkt auf im Hintergrund ermittelte Informationen selbst zurückgegriffen wird.

Hinsichtlich der Informationsdarstellung sind unterschiedliche Möglichkeiten denkbar. Beispielsweise kann die Information in Form einer Punkteskala angegeben werden, wobei bei verbrauchsoptimierter Fahrweise viele Punkte dargestellt werden, während bei verbrauchsschädlicher Fahrweise nur wenige oder keine Punkte gezeigt werden. Selbstverständlich ist auch eine umgekehrte Darstellungsweise denkbar. Eine solche Punkteskala kann beispielsweise auf einfache Weise über ein Reihe separat ansteuerbarer LEDs oder über entsprechende Felder an einem LCD-Display realisiert werden. Alternativ kann die Information auch in Form eines Diagramms ausgegeben werden, beispielsweise mittels einer geometrischen Struktur, die mit zunehmend verbrauchsoptimierter Fahrweise beispielsweise immer weiter farblich ausgeführt dargestellt wird, oder die ihre Farbe mit zunehmend optimierter Fahrweise beispielsweise von rot nach grün ändert etc. Auch eine Ausgabe in Form von Bilddarstellungen (z.B. Sterne, Blumen, etc), die dem Fahrer einen Anreiz bieten, sein Fahrverhalten zu verbessern, ist möglich. Auch hier sind beliebige Darstellungsformen denkbar.

Grundsätzlich ist es möglich, jede einzelne zu einem System (Getriebe, Antriebsaggregat, Bremssystem) ermittelte Information separat auszugeben, wobei zweckmäßigerweise jeweils nur eine Information ausgegeben wird und die Anzeige einer anderen Information über ein geeignetes Bedienelement anwählbar ist. Ein solches Bedienelement kann beispielsweise ein am Lenkrad befindliches Scrollrad oder eine Taste sein. Ist das Display hinreichend groß, ist es selbstverständlich auch möglich, die ermittelten Informationen simultan darzustellen, so dass der Fahrer einen Gesamtüberblick über gleichzeitig ausgegebene Informationen erhält.

Eine besonders zweckmäßige Weiterbildung der Erfindung sieht ferner vor, anhand der ermittelten einzelnen Informationen eine das Gesamtverhalten qualitativ im Hinblick auf einen verhaltensbezogenen Kraftstoffverbrauch beschreibende Gesamtinformation zu ermitteln und auszugeben ist. Mit dieser Erfindungsausgestaltung wird also anhand der Einzelinformationen eine Gesamtinformation ermittelt, die letztlich das Fahrverhalten qualitativ beschreibt. Dabei ist es möglich, die einzelnen Informationen, also die Einzelwertungen hinsichtlich des Bedienverhaltens der beschriebenen Komponenten, entweder gleichmäßig zu wichten, oder unterschiedlich, je nach ihrem Einfluss auf den Verbrauch. So kann beispielsweise das Beschleunigungsverhalten anders, stärker gewichtet werden als das Bremsverhalten.

Die einzelnen Information werden wie beschrieben laufend neu ermittelt. Nachdem aus ihnen auch die Gesamtinformation ermittelt wird, gehen folglich laufende Änderungen der Informationen in die Gesamtinformation ein. Mit zunehmender Fahrtdauer jedoch nähert sich die Gesamtinformation einer Art Durchschnittswert. Um die Bewertung über einen längeren Fahrtzeitraum dennoch so sensibel zu gestalten, dass sich auch vereinzelte Fahrmanöver bemerkbar machen und über die Gesamtinformation den Fahrer auch dargestellt werden können, sieht eine zweckmäßige Weiterbildung der Erfindung vor, die Gesamtinformation retrospektiv für eine vorbestimmte Zeitdauer zu ermitteln und zeitaufgelöst darzustellen, wobei die Ermittlung beispielsweise für 5-15 Minuten retrospektiv zeitaufgelöst erfolgt. Die Ausgabe erfolgt also beispielsweise in einzelnen Minutenschritten, d. h., der Fahrer erhält beispielsweise für die zurückliegenden fünf Minuten für jede Minute eine Darstellung der auf diese Minute bezogenen bzw. ermittelten Gesamtinformation. Wird die Gesamtinformation beispielsweise in Form einer Punkteskala dargestellt, umfassend maximal fünf Punkte, so sind insgesamt fünf Punkteskalen vorgesehen, jeweils eine für eine vergangene Minute. Anhand dieser einzelnen Darstellungen kann der Fahrer so über die vergangenen beispielsweise fünf Minuten konkret die Auswirkungen einzelner Fahrmanöver auf die Gesamtwertung erkennen. Die Gesamtinformation, also beispielsweise die Gesamtpunktezahl, kann entweder laufend aus den einzelnen Informationen, also den Einzelpunktezahlen, neu berechnet werden, so dass mit Ablauf jeder weiteren Minute die einzelnen zeitaufgelösten Gesamtinformationsdarstellungen um eine neue Gesamtinformationsdarstellung ergänzt werden, während die ältesten nicht mehr dargestellt wird. Denkbar ist es auch, in jeweils fünfminütigen Intervallen die Gesamtinformation aus den einzelnen Informationen neu zu berechen und die sich daraus ergebenden fünf neuen minutenbezogenen Gesamtinformationen darzustellen. Alternativ zur Darstellung in Form einer Punkteskala ist selbstverständlich auch hier die Darstellung in Diagrammform denkbar, beispielsweise über Balkendiagramme oder dergleichen.

Eine besonders zweckmäßige Weiterbildung sieht vor, wenigstens eine einzelne Information und die Gesamtinformation an einer Anzeigeeinrichtung gemeinsam auszugeben. Sofern hinreichend Anzeigefläche zur Verfügung steht, ist es selbstverständlich auch denkbar, alle einzelnen Informationen sowie die Gesamtinformation darzustellen. Zum Wechsel der Darstellung hin zu einer retrospektiven Gesamtinformationsdarstellung kann über ein geeignetes Bedienelement wie beispielsweise eine Taste oder ein Scrollrad etc., vorzugsweise am Lenkrad, die entsprechende Darstellungsweise angewählt werden.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs mit der Systemarchitektur zur Ermittlung und Ausgabe der Bewertungsinformationen, und
- Fig. 2 - 6: verschiedene Darstellungen an der Anzeigeeinrichtung während des Betriebs der Einrichtung zur Ermittlung und Ausgabe der Bewertungsinformationen.

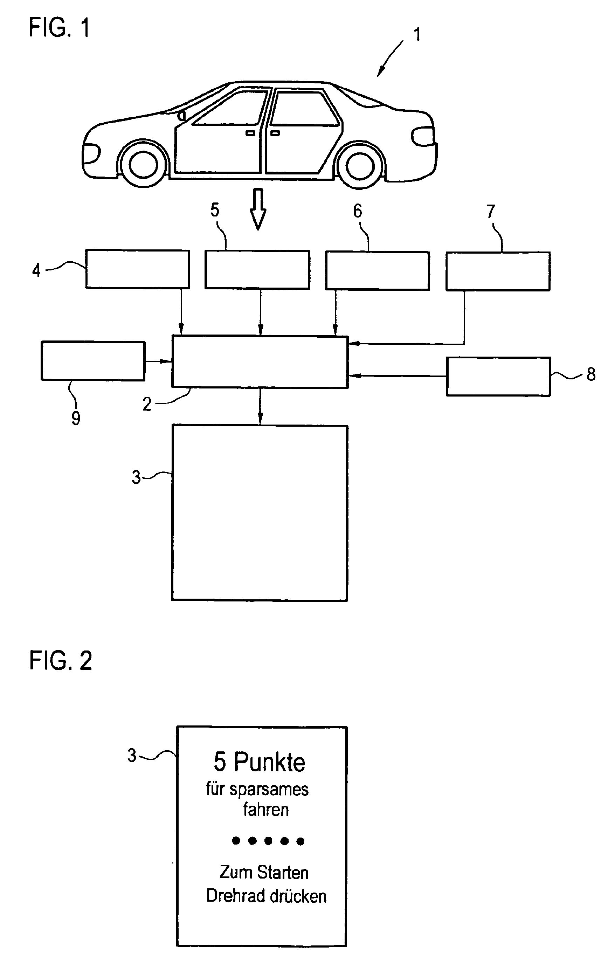

Fig. 1 zeigt ein erfindungsgemäßes Kraftfahrzeug 1, umfassend eine Einrichtung 2, mittels der, worauf nachfolgend noch eingegangen wird, anhand von verschiedenen Betriebsparametern verschiedene Bedienverhaltensweisen verschiedener Fahrzeugelemente qualitativ im Hinblick auf den Kraftstoffverbrauch bewertet und hieraus eine Information ermittelt werden kann, die dem Fahrer an einer geeigneten Anzeigeeinrichtung 3, beispielsweise einem kleinen LCD-Bildschirm im Bereich des Kombiinstruments oder einem größerflächigen LCD-Display im Bereich des Armaturenbretts, angezeigt werden kann.

Die Fahrzeugkomponenten, deren Bedienverhalten qualitativ bewertet wird, sind zum einen das Getriebe 4, zu dem das Schaltverhalten bewertet wird. D. h., es wird hier mittels der Einrichtung 2 qualitativ bewertet, ob der Fahrer zu verbrauchsmäßig gesehen richtigen Zeitpunkten schaltet, so dass ein möglichst geringer Mehrverbrauch durch ein vernünftiges Schaltverhalten erreicht wird, oder ob, weil zu einem höheren Verbrauch führend, zu falschen Zeitpunkten geschaltet wird.

Eine weitere Fahrzeugkomponente, bezüglich deren Bedienverhalten eine Bewertungsinformation ermittelt wird, ist das Antriebsaggregat 5, bei dem es sich um eine Brennkraftmaschine oder einen Elektromotor oder dergleichen handeln kann. Auch hier wird über die Einrichtung 2 ermittelt, ob entweder sanft und moderat beschleunigt wird, was verbrauchsmindernd wirkt, oder ob stets uneffektiv beschleunigt wird und damit ein erhöhter Kraftstoffverbrauch resultiert.

Schließlich ist als dritte Fahrzeugkomponente das Bremssystem 6 dargestellt, zu dem ebenfalls eine Bedienverhaltensinformation ermittelt wird, die angibt, ob der Fahrer in überwiegendem Maß vorausschauend und sachte verzögert und gegebenenfalls auch wenn möglich unter Nutzung der Motorbremse im Schubbetrieb ausrollt, ohne das Bremssystem zu betätigen, oder ob der Fahrer stets sehr stark bremst etc.

Das Schaltgetriebe 4 (manuelles Getriebe oder in einem Schaltmodus betreibbares Automatikgetriebe), das Antriebsaggregat 5 und das Bremssystem 6 oder ihre entsprechenden Steuergeräte legen entsprechende Betriebsparameter an einen hier nicht näher gezeigten Fahrzeugbus, üblicherweise den CAN-Bus, über den die Einrichtung 2 sämtliche zur Bewertung erforderlichen Betriebsparameter abgreifen kann. An dem Fahrzeugbus liegen auch die Betriebsparameter weiterer relevanter Systeme an, exemplarisch ist hier beispielsweise der Motor 7 dargestellt, von dem beispielsweise Drehzahl- und Lastparameter erfasst werden, ferner ist exemplarisch das Kombiinstrument 8 dargestellt, an dem ebenfalls eine Vielzahl von Informationen zusammengefasst werden, etc. Die Einrichtung 2 greift vom Fahrzeugbus sämtliche Betriebsparameter ab, die in irgendeiner Weise zu einer möglichst objektiven Bewertung des Bedienverhaltens einer der beschriebenen Fahrzeugkomponenten 4, 5, 6 führen.

Gezeigt ist ferner ein Bedienelement 9, beispielsweise eine Taste oder ein Scrollrad am Lenkrad, über das der Betrieb der Einrichtung 2 zu- oder abgeschaltet werden kann. Die Einrichtung 2 ist jedoch derart ausgelegt, dass sie auch, wenn ihre grundsätzliche Anzeigefunktion ausgeschaltet ist, kontinuierlich im Hintergrund die relevanten Betriebsparameter erfasst und retrospektiv speichert, und gegebenenfalls hieraus bereits Informationen ermittelt und speichert, um bei Zuschalten der Einrichtung 2 über das Bedienelement 9 sofort entsprechende Informationen an der Anzeigeeinrichtung 3 ausgeben zu können, ohne hierfür erst gegebenenfalls über einen vorbestimmten Zeitraum Betriebsparameter erfassen und verarbeiten zu müssen. An der Anzeigeeinrichtung 3 ist beispielsweise eine Menüstruktur dargestellt, innerhalb welcher unterschiedliche Systeme angewählt werden können, die sodann unterschiedlichste Informationen oder Darstellungen an der Anzeigeeinrichtung 3 wiedergeben, beispielsweise ein Bordcomputer, Fahrzeugeinstellungen etc. Unter anderem kann in diese Menüstruktur auch der Betrieb der Einrichtung 2 eingebunden sein, der Fahrer wählt also innerhalb des Menüs die Einrichtung 2 an, die daraufhin grundsätzlich zugeschaltet wird, woraufhin die entsprechenden Informationsdarstellungen erfolgen können.

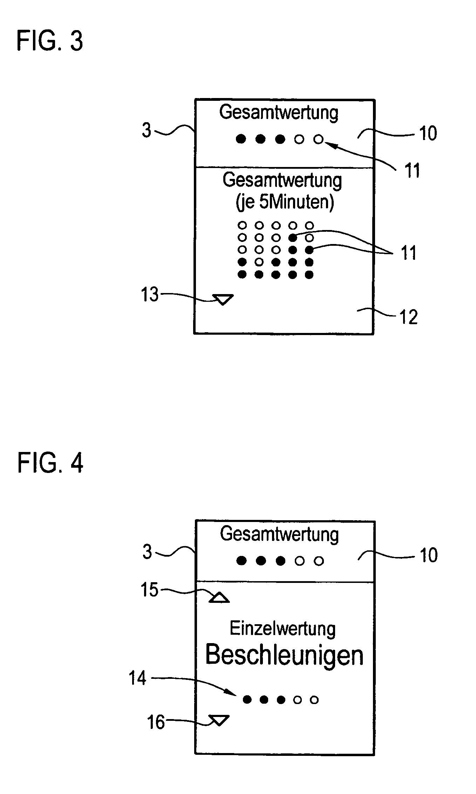

Die Fig. 2 - 6 zeigen exemplarisch unterschiedliche Darstellungen an der Anzeigeeinrichtung 3, wie sie während des Betriebs der Einrichtung 2 erfolgen können. Fig. 2 zeigt die Anzeigeeinrichtung 3 und die dortige Darstellung, wenn beispielsweise mit dem Bedienelement 9 an der Anzeigeeinrichtung 3 grundsätzlich die Einrichtung 2 zugeschaltet wurde. Angegeben ist als Fahrerinformation, dass er beispielsweise fünf Punkte erhält, wenn er eine sparsame Fahrweise zeigt, wobei ihm die Punkteskala visualisiert ist. Zum Starten der Informationsdarstellung ist im gezeigten Beispiel das Dreh- oder Scrollrad am Lenkrad zu drücken. Nimmt dies der Fahrer vor, so wechselt die Anzeigedarstellung zu der gemäß Fig. 3. Dort wird zunächst eine Gesamtinformation, dort als "Gesamtwertung" benannt, ausgegeben, wie ihm oberen Anzeigebereich 10 dargestellt ist. Dies erfolgt hier über eine Punkteskala 11 mit maximal fünf Punkten. Diese Gesamtinformation wird anhand der nachfolgend noch beschriebenen Einzelinformationen, die zu den einzelnen Betriebskomponenten 4, 5, 6 ermittelt werden, gegebenenfalls in unterschiedlicher Gewichtung der einzelnen Informationen ermittelt. Diese Ermittlung erfolgt auch bei nicht zugeschalteter Einrichtung 2 im Hintergrund, so dass - wie hier - mit Zuschalten der Einrichtung 2 sofort die Informationen vorliegen und angezeigt werden können. Dies gilt für alle nachfolgend noch beschriebenen Informationen. Im gezeigten Beispiel leuchten von den fünf Punkten drei Punkte, d. h., dass die Fahrweise durchaus optimiert werden könnte.

In dem darunterliegenden Anzeigefeld 12 ist die Gesamtinformation (= Gesamtwertung) für die zurückliegenden fünf Minuten zeitaufgelöst dargestellt. Insgesamt sind hier fünf separate Punkteskalen 11 gezeigt, die hier vertikal verlaufen, und die ebenfalls jeweils fünf Punkte umfassen. Ersichtlich leuchten dort innerhalb der jeweiligen vertikalen Reihen jeweils unterschiedlich viele Punkte auf, d. h., dass sich die Gesamtwertung zeitaufgelöst über die zurückliegenden fünf Minuten aufgrund unterschiedlicher Bedienhandlungen geändert hat. Der Fahrer erhält hierüber einen schnellen Überblick dahingehend, wie sein Fahrverhalten sich nach Durchführung bestimmter geänderter Verhaltensweisen geändert hat. Diese Informationen werden laufend neu ermittelt, so dass der Fahrer während der Fahrt gezielt die Wirkung verschiedener Handlungen überprüfen kann.

Über einen beispielsweise mit dem Scrollrad anwählbaren Menüpfeil 13 gelangt der Fahrer zu den Darstellungen der Einzelinformationen, die nachfolgend in den Figuren als "Einzelwertung" benannt sind. Diese sind in den Fig. 4 - 6 dargestellt.

Fig. 4 zeigt die Anzeigeeinrichtung 3, wobei nach wie vor die Gesamtinformation im oberen Anzeigefeld 10 dargestellt ist. Als Einzelinformation ist hier die Information betreffend das Antriebsaggregat 5 dargestellt, also das Beschleunigungsverhalten. Ersichtlich ist auch hier eine Punkteskala 14 gezeigt, wiederum umfassend fünf Punkte, von denen im gezeigten Beispiel drei Punkte leuchten. D. h, dass das Beschleunigungsverhalten noch nicht optimal ist, der Fahrer beschleunigt also häufig doch noch zu stark, um das Fahrverhalten als kraftstoffsparend qualifizieren zu können. Der Fahrer kann nun durch Veränderung des Beschleunigungsverhaltens sofort prüfen, ob dies einen positiven oder negativen Einfluss auf die Bewertung hat, nachdem die Information laufen neu ermittelt wird und die sich infolge der Verhaltens-änderung ändernden Betriebsparameter in die ermittelte Information eingehen.

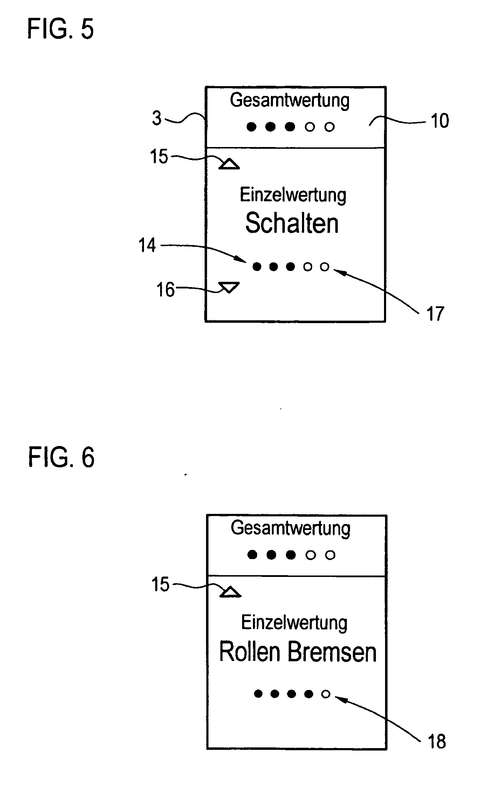

Über zwei Pfeildarstellungen 15, 16 kann der Fahrer nun entweder in die Gesamtinformationsdarstellung (Fig. 3) zurückkehren (Pfeil 15) oder er kann die zweite Einzelinformation anzeigen lassen (Pfeil 16). Dies ist in Fig. 5 dargestellt. Diese Information betrifft das Bedienverhalten des Getriebes, wie dieses also geschaltet wird. Auch hier ist wiederum eine Punkteskala 17 mit fünf separaten Leuchtpunkten dargestellt, von denen drei leuchten. D. h., dass auch das Schaltverhalten optimierbar ist. Der Fahrer schaltet also beispielsweise bei zu hoher Drehzahl in den nächst höheren Gang. Anhand der Punktezahl kann der Fahrer auch hier erkennen, dass sein Verhalten noch verbesserungswürdig ist. Bleibt er bei dieser Darstellung, so kann er durch gezielte Schaltvorgänge selbst ausprobieren, wann es zu einer Erhöhung der Punktezahl kommt, und wann nicht, wann sich also die ermittelte Information zum Positiven und wann zum Negativen wendet.

Über die Pfeildarstellung 15 gelangt der Fahrer wieder zur Darstellung gemäß Fig. 4 zurück, über die Pfeildarstellung 16 kann der Fahrer die letzte Einzelinformationsdarstellung, nämlich das Bedienverhalten des Bremssystems respektive das Rollverhalten bzw. das Nutzen der Motorbremse zur Darstellung anwählen. Auch hier ist eine Punkteskala 18 mit fünf Leuchtpunkten vorgesehen, von denen hier vier leuchten. D. h., das Bremsverhalten ist weitgehend positiv zu bewerten. Über die Pfeildarstellung 15 gelangt der Fahrer wieder zu den vorherigen Darstellungen zurück. Auch hier kann der Fahrer anhand der Informationsänderung die Wirkung einer Änderung seines Bremsverhaltens unmittelbar ablesen und prüfen.

Wie beschrieben wird die Gesamtinformation anhand der Einzelinformationen ermittelt. Die Einzelinformationen, siehe die Fig. 4 - 6, zeigen drei Leuchtpunkte hinsichtlich des Bedienverhaltens des Antriebsaggregats 5, drei Leuchtpunkte hinsichtlich des Bedienverhaltens des Schaltgetriebes 4, und vier Leuchtpunkte hinsichtlich des Bedienverhaltens des Bremssystems. Unter entsprechender Gewichtung (primär wird z. B. das Beschleunigungsverhalten stärker gewichtet als die beiden anderen Informationen) ergibt sich so eine Gesamtinformation von drei Punkten, wie in den Figuren durchweg dargestellt.

An dieser Stelle ist darauf hinzuweisen, dass bei entsprechender Größe der Anzeigeeinrichtung selbstverständlich die Einzelinformationen, wie in den Fig. 4 - 6 dargestellt, auch gemeinsam dargestellt werden können. Daneben ist es denkbar, anstelle der Punkteskalen als Einzel- und Gesamtinformationen auch andere Darstellungsformen in Form von Diagrammen wie Balkendiagramme oder dergleichen zu wählen.

Das Bewertungsergebnis bzw. Informationen über das Fahrverhalten können gegebenenfalls am Ende einer Fahrt bzw. bei Fahrtunterbrechung abgerufen werden, wozu gegebenenfalls ein entsprechender Menüpunkt am Display anzuwählen ist. Hierbei kann auch ausgegeben werden, was wann falsch gemacht wurde, bzw. welche Handlungen zu einer negative Bewertung geführt haben. Schließlich ist auch eine Übertragung der gespeicherten Daten auf ein externes Speichermedium oder einen PC möglich, sofern das Fahrzeug über eine entsprechende Schnittstelle verfügt.

## Patentansprüche

1. Kraftfahrzeug umfassend ein Schaltgetriebe, ein Antriebsaggregat sowie ein Bremssystem, welche allesamt vom Fahrer aktiv zu bedienen sind, wobei eine Einrichtung (2) zur kontinuierlichen Ermittlung separater Informationen, die anhand erfasster Betriebsparameter des Kraftfahrzeugs (1) das Bedienverhalten des Schaltgetriebes (4), das Bedienverhalten des Bremssystems (6) und das Bedienverhalten des Antriebsaggregats qualitativ im Hinblick auf einen verhaltensbezogenen Kraftstoffverbrauch beschreiben und zur Ausgabe der separaten Informationen an einer Anzeigeeinrichtung (3) vorgesehen ist.

2. Kraftfahrzeug nach Anspruch 1,
**dadurch gekennzeichnet,**
**dass** die Einrichtung (2) wahlweise zu- und abschaltbar ist, wobei die Erfassung der Betriebsparameter und gegebenenfalls die Ermittlung der Information auch bei abgeschalteter Einrichtung (2) erfolgt.

3. Kraftfahrzeug nach Anspruch 1 oder 2,
**dadurch gekennzeichnet,**
**dass** die Information in Form einer Punkteskala (14, 17, 18) oder eines Diagramms ausgebbar ist.

4. Kraftfahrzeug nach einem der vorangehenden Ansprüche,
**dadurch gekennzeichnet,**
**dass** jeweils eine Information ausggebbar ist und die Anzeige einer anderen Information über ein Bedienelement (9) wählbar ist.

5. Kraftfahrzeug nach einem der vorangehenden Ansprüche,
**dadurch gekennzeichnet,**
**dass** anhand der ermittelten einzelnen Informationen eine das Gesamtverhalten qualitativ im Hinblick auf einen verhaltensbezogenen Kraftstoffverbrauch beschreibende Gesamtinformation ermittelbar und ausgebbar ist.

6. Kraftfahrzeug nach Anspruch 5,
**dadurch gekennzeichnet,**
**dass** die Gesamtinformation retrospektiv für eine vorbestimmte Zeitdauer ermittelbar und zeitaufgelöst ausgebbar ist.

7. Kraftfahrzeug nach Anspruch 6,
**dadurch gekennzeichnet,**
**dass** die Gesamtinformation für 5-15 Minuten retrospektiv und zeitaufgelöst ermittelbar und ausgebbar ist.

8. Kraftfahrzeug nach einem der Ansprüche 5 bis 7,
**dadurch gekennzeichnet,**
**dass** die Gesamtinformation in Form einer, gegebenenfalls zeitaufgelösten, Punkte- oder Bewertungsskala (11) oder einem, gegebenenfalls zeitaufgelöstem, Diagramm ausgebbar ist.

9. Kraftfahrzeug nach einem der Ansprüche 1 bis 4 und einem der Ansprüche 5 bis 8,
**dadurch gekennzeichnet,**
**dass** wenigstens eine einzelne Information und die Gesamtinformation gemeinsam an der Anzeigeeinrichtung (3) ausgebbar sind.

## Claims

1. Motor vehicle comprising a manual transmission, a drive assembly and a brake system, which can all be operated actively by the driver, wherein a device (2) is provided for continuously acquiring separate information items which describe, on the basis of detected operating parameters of the motor vehicle (1), the operating behaviour of the manual transmission (4), the operating behaviour of the brake system (6) and the operating behaviour of the drive assembly in qualitative terms in respect of behaviour-related fuel consumption, and for outputting the separate information items on a display device (3).

2. Motor vehicle according to Claim 1,
**characterized**
**in that** the device (2) can optionally be switched on and off, wherein the detection of the operating parameters, and if appropriate, the acquisition of the information also take place when the device (2) is switched off.

3. Motor vehicle according to Claim 1 or 2,
**characterized**
**in that** the information can be output in the form of a point scale (14, 17, 18) or a diagram.

4. Motor vehicle according to one of the preceding claims,
**characterized**
**in that** in each case it is possible to output an information item and the displaying of another information item can be selected by means of an operator control element (9).

5. Motor vehicle according to one of the preceding claims,
**characterized**
**in that** overall information which describes the overall behaviour qualitatively in terms of behaviour-related fuel consumption can be acquired on the basis of the acquired individual information items, and output.

6. Motor vehicle according to Claim 5,
**characterized**
**in that** the overall information can be acquired retrospectively for a predetermined time period and output with time resolution.

7. Motor vehicle according to Claim 6,
**characterized**
**in that** the overall information can be acquired retrospectively for 5 - 15 minutes and with time resolution, and output.

8. Motor vehicle according to one of Claims 5 to 7,
**characterized**
**in that** the overall information can be output in the form of a point scale or evaluation scale (11) which has, if appropriate, time resolution, or a diagram which has, if appropriate time resolution.

9. Motor vehicle according to one of Claims 1 to 4, and one of Claims 5 to 8,
**characterized**
**in that** at least one individual information item and the overall information can be output together on the display device (3).

## Revendications

1. Véhicule automobile comprenant une boîte de vitesses, une unité d'entraînement et un système de freinage, qui peuvent tous être commandés activement par le conducteur, un dispositif (2) étant prévu pour déterminer en continu des informations séparées, qui décrivent, à l'aide de paramètres de fonctionnement détectés du véhicule automobile (1), le comportement de fonctionnement de la boîte de vitesses (4), le comportement de fonctionnement du système de freinage (6) et le comportement de fonctionnement de l'unité d'entraînement, de manière qualitative au vu d'une consommation de carburant rapportée au comportement, et pour fournir les informations séparées à un dispositif d'affichage (3).

2. Véhicule automobile selon la revendication 1,
**caractérisé en ce que** le dispositif (2) peut être branché et coupé au choix, la détection des paramètres de fonctionnement et éventuellement la détermination de l'information ayant lieu aussi lorsque le dispositif (2) est coupé.

3. Véhicule automobile selon la revendication 1 ou 2,
**caractérisé en ce que**
l'information peut être fournie sous forme d'échelle ponctuelle (14, 17, 18) ou de diagramme.

4. Véhicule automobile selon l'une quelconque des revendications précédentes,
**caractérisé en ce**
**qu'**une information peut à chaque fois être fournie et l'affichage d'une autre information peut être sélectionné par le biais d'un élément de commande (9).

5. Véhicule automobile selon l'une quelconque des revendications précédentes,
**caractérisé en ce**
**qu'**une information totale décrivant le comportement total de manière qualitative en termes de consommation de carburant associée au comportement peut être déterminée et fournie au moyen des informations individuelles déterminées.

6. Véhicule automobile selon la revendication 5,
**caractérisé en ce que**
l'information totale peut être déterminée de manière rétrospective pendant une durée prédéterminée et être fournie avec résolution temporelle.

7. Véhicule automobile selon la revendication 6,
**caractérisé en ce que**
l'information totale peut être déterminée de manière rétrospective pendant 5 à 15 minutes et être fournie avec résolution temporelle.

8. Véhicule automobile selon l'une quelconque des revendications 5 à 7,
**caractérisé en ce que**
l'information totale peut être fournie sous forme d'une échelle ponctuelle ou d'analyse (11) éventuellement à résolution temporelle, ou sous forme d'un diagramme, éventuellement à résolution temporelle.

9. Véhicule automobile selon l'une quelconque des revendications 1 à 4 et l'une quelconque des revendications 5 à 8,
**caractérisé en ce**
**qu'**au moins une information individuelle et l'information totale peuvent être fournies en même temps au dispositif d'affichage (3).
